# EUROPEAN PATENT SPECIFICATION

(11) **EP 4 299 480 B1**
(45) Date of publication and mention of the grant of the patent: **04.02.2026**
(21) Application number: 23181894.9
(22) Date of filing: 27.06.2023
(51) Int. Cl.: B65G 17/12, B65G 17/36, B65G 17/48, B65G 17/16, B65G 47/40

(54) **LOW MAINTENANCE BUCKET ELEVATOR FOR MOVING HEAVY AND/OR ABRASIVE MATERIAL, AS WELL AS LINE FOR MOVING HEAVY AND/OR ABRASIVE MATERIAL AND METHOD OF USE OF THE BUCKET ELEVATOR**
WARTUNGSARMER BECHERAUFZUG ZUM BEWEGEN VON SCHWER- UND/ODER SCHLEIFMATERIAL SOWIE LEITUNG ZUM BEWEGEN VON SCHWER- UND/ODER SCHLEIFMATERIAL UND VERFAHREN ZUR VERWENDUNG DES BECHERAUFZUGS
ÉLÉVATEUR À GODETS À ENTRETIEN RÉDUIT POUR DÉPLACER DES MATÉRIAUX LOURDS ET/OU ABRASIFS, ET LIGNE POUR DÉPLACER DES MATÉRIAUX LOURDS ET/OU ABRASIFS ET PROCÉDÉ D'UTILISATION

(30) Priority: 27.06.2022 IT 202200013552
(43) Date of publication of application: 03.01.2024
(73) Proprietor: Cidiesse Engineering S.r.l., 36013 Piovene Rocchette (VI) (IT)
(72) Inventor: Dal Santo, Francesca, 36016 Thiene (VI) (IT); De Moli, Emanuele, 36031 Dueville (VI) (IT)
(74) Representative: Autuori & Partners S.R.L.

(56) References cited:
- EP-A1- 3 892 571
- DE-A1- 3 728 881
- US-A- 4 972 934
- US-A1- 2004 094 390

## Description

### Field of the invention

The present invention is generally relates to the technical field of moving heavy and/or abrasive materials, such as for example marble, quartz or the like, and in particular it relates to a low maintenance bucket elevator for moving heavy and/or abrasive materials, a line for moving heavy and/or abrasive material and a method of use of the bucket elevator.

### Definitions

In the present document, the expression "abrasive material" and derivatives is used to indicate all natural or artificial materials, such as for example quartz, silica, salts and the like which, being of the removal action type, can lead to wear phenomena on metals, especially steel and the like.

### State of the Art

In the construction industry, it is common knowledge that moving heavy and/or abrasive materials, such as for example marble, quartz or the like, from a lower height to higher height, mainly occurs through conveyor belts.

Generally, in order to enable the conveyed heavy and/or abrasive material to reach the raised unloading station, conveyor belts require paths with low slope and with particular trajectories, for example zig-zag-like.

The conveyor belts are therefore particularly cumbersome, not versatile in terms of configurations and therefore poorly efficient.

Furthermore, such conveyor belts require highly frequent maintenance, given that the abrasive material tends to rapidly damage the moving components thereof, in particular the support belt.

From document US 2004/094390 a bucket elevator according to the preamble of claim 1 is known.

### Summary of the invention

An object of the present invention is to at least partially overcome the drawbacks observed above, by providing a bucket elevator for moving heavy and/or abrasive materials that is particularly efficient and reliable.

A further object of the invention is to provide a bucket elevator for moving heavy and/or abrasive materials that is particularly compact and versatile.

A further object of the invention is to provide a low maintenance bucket elevator for moving heavy and/or abrasive materials.

A further object of the invention is to provide a bucket elevator for moving heavy and/or abrasive materials that is particularly cost-effective.

A further object of the invention is to provide a line for moving heavy and/or abrasive material that is particularly versatile.

A further object of the invention is to provide a method of use of a bucket elevator for moving heavy and/or abrasive material that is particularly reliable and easy to implement.

These and other objects which will be more apparent hereinafter, are attained by a bucket elevator and/or a line and/or a method of use of the bucket elevator as described, illustrated and/or claimed herein.

The dependent claims describe advantageous embodiments of the invention.

### Brief description of the drawings

Further characteristics and advantages of the invention will be more apparent in the light of the detailed description of the main embodiments, shown by way of non-limiting example with reference to the attached drawings, wherein:
**FIG.1** is an axonometric view of a plurality of buckets **4** stably connected to each other;
**FIG.2** is an axonometric view of a bucket **4;**
**FIG.3** is a schematic axonometric view of the interaction between a bucket **4** and the unloading means **6** in proximity of an unloading area **3;**
**FIG.4** is a schematic axonometric view of a line **L** for moving heavy and/or abrasive material through a bucket elevator **1** and with a plurality of unloading areas **3;**
**FIG.5A** is a schematic view of a Z-shaped configuration of the bucket elevator **1;**
**FIG.5B** is a schematic view of a C-shaped configuration of the bucket elevator **1;**
**FIG. 6** is an axial sectional schematic view of a bucket elevator **1** with a single unloading area **3;**
**FIG. 7** is an exploded axonometric schematic view of a bucket **4;**
**FIG. 8** is an axonometric schematic view of a bucket **4;**
**FIG. 9A** is a lateral schematic view of some coupled buckets **4** wherein the connection edge **42** rests against the support edge **41,** regarding which **FIG. 9B** is a cross-sectional view along the plane A-A and **FIG. 9C** a cross-sectional view along the plane B-B;
**FIG. 9D** is an enlarged view of a detail of **FIG. 9C****;**
**FIG. 10** is an axonometric view of some buckets **4** coupled to the chains **50.**

### Detailed description of the invention

With reference to the aforementioned figures, herein described is a low maintenance bucket elevator **1** for moving heavy and/or abrasive materials.

Generally, the heavy and/or abrasive material to be moved may for example be marble, quartz, silica or the like. However, it is clear that the bucket elevator **1** in question may also be used for moving light materials, for example light food products such as pasta, seeds, legumes, dry fruits or the like, and possibly even abrasive, such as for example light food products characterised by a high percentage of salt, in particular fine salt, such as for example potato chips covered with salt and the like, without departing from the scope of protection of the attached claims.

Although in the description hereinafter reference will be made to moving a heavy and/or abrasive material, it is however clear that there may also be moved a combination or a mixture of heavy and/or abrasive materials, without departing from the scope of protection of the attached claims.

In addition, all the characteristics mentioned with particular reference to the heavy and/or abrasive material may refer to light materials, possibly even abrasive, without departing from the scope of protection of the attached claims.

Furthermore, the bucket elevator **1** may be suitably sized and configured to move the heavy and/or abrasive material from a first lower height to a second higher height following a determined path.

Generally, the bucket elevator **1** comprises a plurality of buckets **4,** which may be designed to convey the heavy and/or abrasive material to be moved.

In greater detail, each bucket **4** extends along a longitudinal axis T and it may define a prism structure **40.**

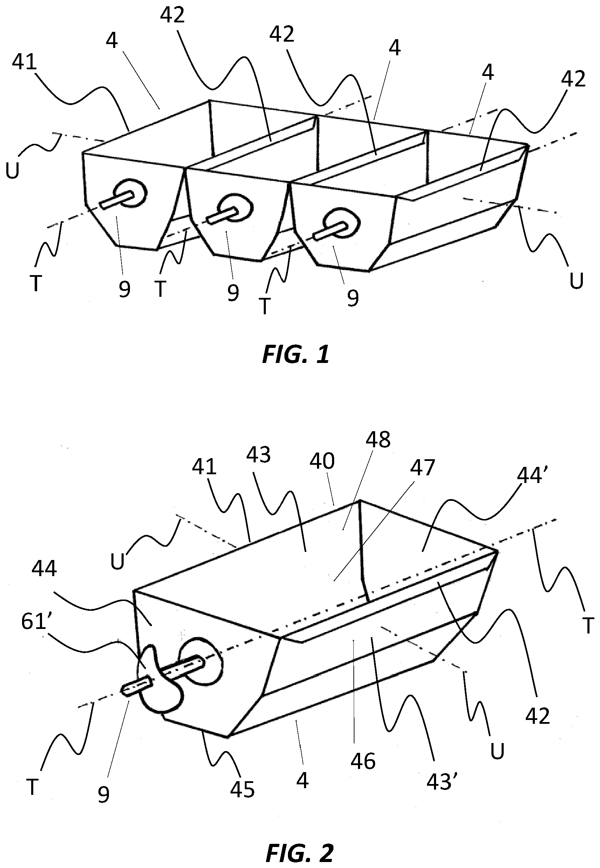

The latter may also include a bottom wall **45** and four side walls **43, 43', 44, 44',** defining - as a whole - a compartment **47** accessible by an opening **48** as shown in **FIG.** 2.

In particular, the walls **43, 43'** may be mutually faced and lie on incident planes with respect to the longitudinal axis **T** along which the walls **43, 43'** extend, while the walls **44, 44'** may also be mutually faced and lie on incident planes with respect to a transversal axis **U,** the latter substantially perpendicular with respect to the axis **T.**

However, it is clear that the walls **43, 43'** lie on planes parallel to the axis **T** and the walls **44, 44'** lie on planes parallel to the axis **U** according to the attached claims.

In this manner, the compartment **47** may therefore be designed to house the material to be moved.

Advantageously, the use of a plurality of buckets **4** may allow to minimise the relative movement of the heavy and/or abrasive material and - as a result - maintain both the composition and microgranularity thereof, given that the containment in the compartment **47** limits the possible jerky and/or translatory movement thereof.

Furthermore, the buckets **4** may be suitably sized to contain a determined amount of material, for example at least 40 kg, preferably 40 - 50 kg.

For example, the walls **43, 43', 44, 44'** and **45** may define a containment volume of at least 16 dm³, preferably 16 - 20 dm³.

In this manner, this will therefore also allow to change the capacity of the bucket elevator **1** in question, depending on the type of material conveyed and the type of path to be travelled through.

Generally, the bucket elevator 1 may comprise a loading area **2** at the lower height where the buckets **4** may be loaded with the material to be moved.

However, it is clear that the bucket elevator **1** may also comprise a plurality of areas **2** for loading the buckets **4** with the material to be moved without departing from the scope of protection of the attached claims.

For example, the buckets **4** may be loaded using a vibrating screening machine or the like and/or conveyor belts, arranged at the loading area **2** and suitably configured to unload the precise amount of material in each bucket **4** so as to have a homogeneous and constant distribution of the product on the buckets.

However, it is clear that the buckets **4** may be also loaded manually without departing from the scope of protection of the attached claims.

Subsequently, the bucket elevator **1** may comprise an unloading area **3** at the higher height, for unloading the material moved by the buckets **4.**

Preferably, there may also be provided for a plurality of areas **3** for unloading the moved material, so as to increase the versatility of the bucket elevator **1.**

Advantageously, the unloading areas **3** may therefore actually be arranged at the points where one desires to unload the moved material.

Other advantages of this particular aspect of the invention will be clearer in the description below.

However, it is clear that, although in the description hereinafter reference will be made to a bucket elevator **1** with a single loading area **2** and a plurality of unloading areas **3,** there may be provided for multiple loading areas **2** and/or a single unloading area **3** or a plurality thereof without departing from the scope of protection of the attached claims.

By way of example, the buckets **4** may further unload the material within one or more hoppers: the latter may therefore be suitably sized and arranged at each unloading area **3** to allow to collect the material therein.

Generally, the bucket elevator **1** comprises suitable movement means **5** operatively connected with the buckets **4** to allow the movement thereof between the loading area **2** and the unloading areas **3.**

This means that the buckets **4** may be moved from the loading area **2** to the unloading areas **3** following a predetermined path to allow the unloading of the moved material.

After unloading the moved heavy and/or abrasive material, the emptied buckets **4** may therefore be moved from the unloading areas **3** to the loading area **2** following a complementary path so as to be filled with the material to be moved once again.

Generally, the bucket elevator **1** may further comprise a support structure **7** which may be self-supporting and preferably made of metal material, adapted to confer structural unity to the bucket elevator **1.**

Advantageously, the support structure **7** may also allow to increase the safety and protection level of possible operators in the working area of the bucket elevator **1.**

The bucket elevator **1** may also further comprise an outer support structure suitably sized to confer further structural stability to the bucket elevator **1** and therefore ensure greater safety, further minimising any vibrations both due to the size of the bucket elevator **1** and the high loads moved by the same.

In particular, the bucket elevator **1** may define a portion **11** for advancing the buckets **4** along an axis **X'** and a portion **12** for advancing along an axis **X".**

In greater detail, the advancement portion **11** may be at the loading area **2,** while the advancement portion **12** may be at the unloading area **3.**

According to a preferred aspect of the invention, the unloading areas **3** may be consecutive and arranged at pre-established distances along the axis **X'** of the advancement portion **12.**

Therefore, this will allow to obtain a multiple unloading bucket elevator **1** that is small in size and particularly versatile.

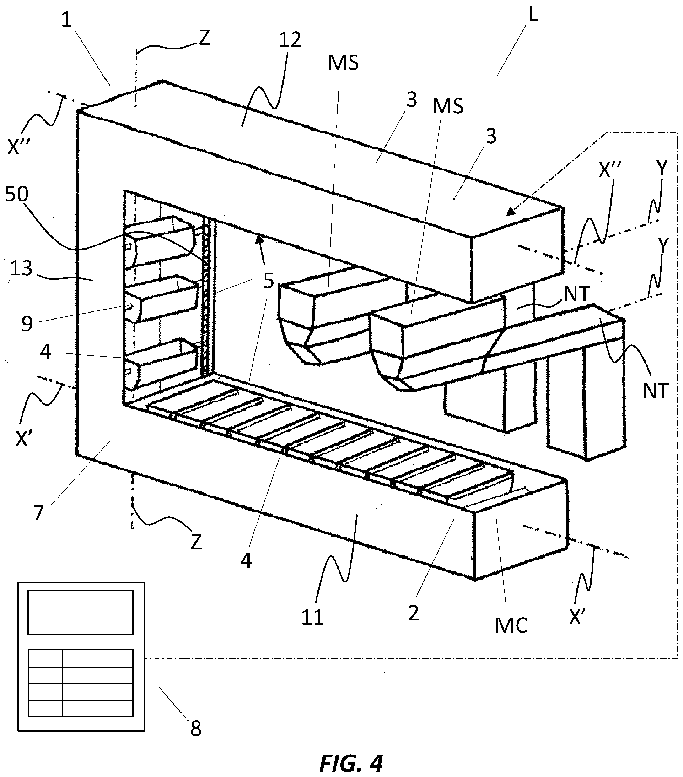

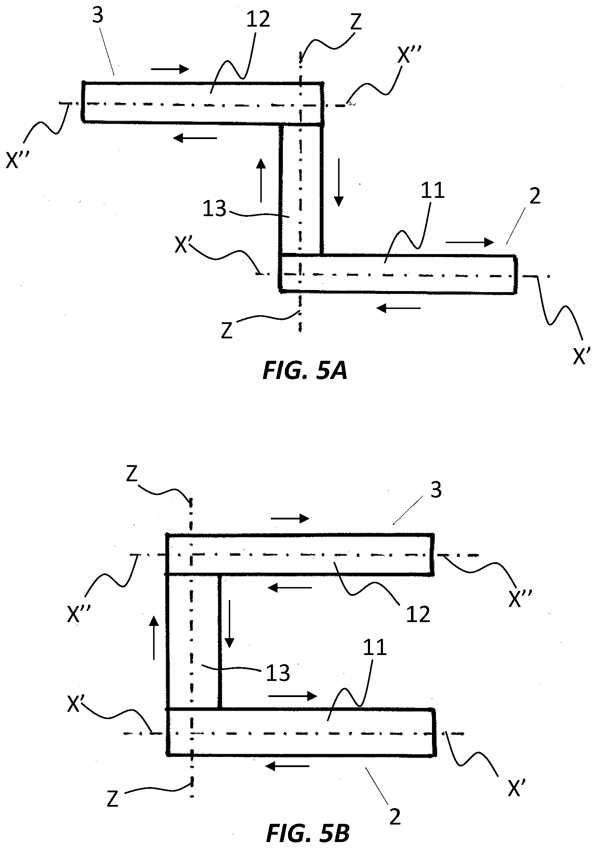

Furthermore, the bucket elevator **1** may also comprise a portion **13** for advancing along an axis **Z,** the latter interposed between the advancement portion **11** and the advancement portion **12,** as shown in **FIGS. 4****,** **5A** and **5B****.**

For example, the portion **11** may extend for 10 - 12 m, the portion **12** may extend for 25 - 30 m, while the portion **13** may extend for 10 - 12 m.

Thanks to the presence of the advancement portion **13,** the advancement portion **11** and advancement portion **12** may therefore be mutually spaced apart.

Furthermore, according to a preferred but not exclusive embodiment, the axes **X'** and **X"** respectively of the advancement portion **11** and of the advancement portion **12** may be substantially parallel.

In addition, the axis **Z** may be perpendicular to the axes **X'** and **X"** respectively of the advancement portion **11** and of the advancement portion **12.**

For example, this means that the advancement portion **13** may extend vertically with respect to the advancement portion **11** and the advancement portion **12,** which may instead extend horizontally.

However, it is clear that the axis **Z** may also not be perpendicular to the axes **X'** and **X",** that is the third advancement portion **13** may extend obliquely with respect to the first advancement portion **11** and to the second advancement portion **12,** which may however remain substantially parallel to one with respect to the other, without departing from the scope of protection of the attached claims.

According to a first preferred but not exclusive embodiment, the axes **X'** and **X"** may have the same direction, where the direction is defined by the advancement direction of the buckets **4.**

In this first case, the bucket elevator **1** may have a so-called Z-shaped configuration and shown in **FIG. 5A****.**

According to a second preferred but not exclusive embodiment, the axes **X'** and **X"** may have substantially opposite direction, where the direction is defined by the advancement direction of the buckets **4.**

In this second case, the bucket elevator **1** may have a so-called C-shaped configuration and shown in **FIG. 5B****.**

Advantageously, the C-shaped configuration may be used should there arise the need to contain the overall dimensions of the bucket elevator **1.**

Furthermore, according to a preferred but not exclusive embodiment, the movement means **5** may comprise a pair of chains **50** which are closed and movable along the advancement portions **11, 12** and **13.**

In use, the chains **50** may remain mutually facing each other and spaced apart with respect to the axes **X', X"** and **Z** along the respective advancement portions **11, 12** and **13 ,** as particularly shown in **FIG.** 4.

The use of a pair of chains **50** is particularly advantageous, given that it allows to move considerable loads and further obtain a significant speed for moving the buckets **4.**

In particular, each bucket **4** may be laterally connected to the chains **50** through suitable connection means **9.**

In this manner, the abrasive material will not jeopardise the connection means **9** and the buckets **4** may be rotatably coupled to the pair of chains **50.**

The rotatable coupling between the buckets **4** and the pair of chains **50** may therefore allow the free rotation of the buckets **4** around the rotation axis thereof, which - in this case - coincides with the longitudinal axis **T.**

The expression free rotation of the buckets **4** around the rotation axis thereof **T** is used to indicate that the rotary movement of each bucket **4** around the rotation axis thereof **T** may be independent, at least in the advancement portion **12** and - as a result - in proximity of the unloading areas **3,** from the translation movement imparted by the movement means **5** thereon.

In particular, the rotation axis **T** of each bucket **4** will be substantially perpendicular to the axis **X"** of the advancement portion **12.**

However, it is clear that each bucket may freely rotate around rotation axis **T** thereof even at the advancement portion **11** and/or at the advancement portion **12,** without departing from the scope of protection of the attached claims.

The free rotation range of each bucket **4** may further be by an angle **α** measuring 100° - 150°, preferably 130° - 140° with respect to the plane defined by the advancement portion **12.**

Then, both at the initial sections and at the final sections of the advancement portion **11** and of the advancement portion **12** there may be provided for a pair of pinions **51** coupled to a drive shaft.

Each pinion **51** may therefore be peripherally coupled with the respective chain **50** to allow the movement thereof and therefore also the buckets **4.**

Subsequently, the bucket elevator **1** may further comprise suitable unloading means **6** adapted to allow the unloading of the buckets **4** at the unloading areas **3.**

To this end, the unloading means **6** may therefore be arranged at each unloading area **3.**

In greater detail, the aforementioned unloading means **6** may therefore act on the buckets **4** to allow the rotation thereof around the respective rotation axis **T** and the ensuing unloading of the material at the one or more unloading areas **3,** as will be clearer in the description hereinafter.

Furthermore, the bucket elevator **1** may also comprise suitable control means **8,** which may act on the unloading means **6** and be suitably configured to allow the selective unloading of the buckets **4** at the one or more unloading areas **3.**

The expression selective unloading of the buckets **4** is used to indicate that the material moved by the bucket **4** may therefore be unloaded by way of response to a command imparted by the control means **8** and therefore only in the unloading areas **3** which were selected by the latter.

This means that the control means **8** may select one or more unloading areas **3** and therefore act on the respective unloading means **6** for unloading the buckets **4** in the selected unloading areas **3.**

It is therefore clear that the buckets **4** will not be unloaded at the unloading areas **3** which were not selected by the control means **8.**

As a matter of fact, thanks to the interdependence between the rotation motion around the rotation axis **T** of each bucket **4** and the translation motion thereof along the advancement portion **13,** the unloading means **6** selected by the control means **8** may act on the buckets **4** at the unloading areas **3** of interest therefore so as to allow the unloading thereof.

Advantageously, the control means **8** may further be configured to control the advancement of the movement means **5.**

In particular, the unloading means **6** may comprise one or more abutment elements **61** and one or more counteracting elements **62,** which may be suitably shaped and mutually interact to allow the rotation of the buckets **4** around the rotation axis thereof **T** at the one or more selected unloading areas **3.**

According to a preferred but not exclusive embodiment, the support structure **7** may comprise one or more counteracting elements **62,** while the buckets **4** may comprise one or more abutment elements **61.**

However, it is clear that even the opposite may occur, that is the support structure **7** may comprise the one or more abutment elements **61,** while the buckets **4** may comprise the one or more counteracting elements **62,** without departing from the scope of protection of the attached claims.

Furthermore, the unloading means **6** may also comprise pairs of abutment elements **61** and pairs of counteracting elements **62,** mutually spaced apart with respect to the axis **X"** of the advancement portion **12,** without departing from the scope of protection of the attached claims.

In particular, each bucket **4** may comprise one or more suitably shaped cam elements **61',** which may define the one or more abutment elements **61,** while the support structure **7** may comprise one or more pivots **62',** which may define the one or more counteracting elements **62.**

According to a preferred but not exclusive embodiment, there may be provided for a single cam element **61'** integrally joined with respective bucket **4** and in particular it may be mounted on the connection means **9.**

The pivots **62'** may further be movable between a retracted position and an extended position along a direction perpendicular to the axis **X"** of the advancement portion **12.**

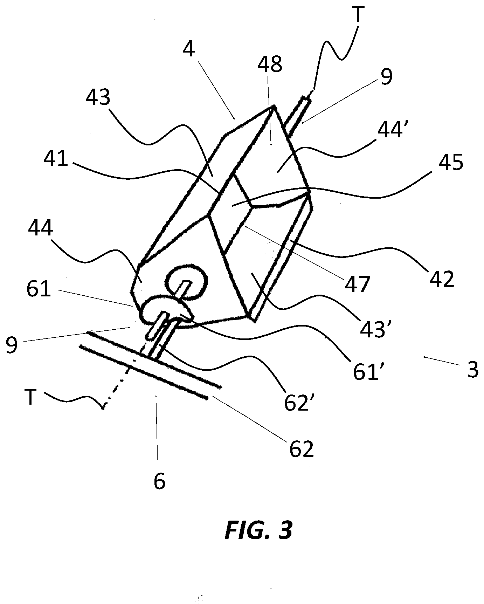

When the pivot **62'** will be in the extended position, it may actually interact with the cam elements **61'** of the buckets **4** when the latter are at an unloading area **3,** as shown in **FIG. 3****.**

In this manner, the cam element **61'** of the buckets **4** may actually abut against the pivot **62'** arranged at the unloading area **3** of interest.

Following the interaction with the pivot **62',** the cam element **61'** may therefore rotate around the axis **T** of the bucket **4** switching from an initial inoperative position to a maximum rotation position.

Due to the fact that the cam element **61'** is integrally joined with the respective bucket **4,** even the latter may - as a result - rotate around the rotation axis **T.**

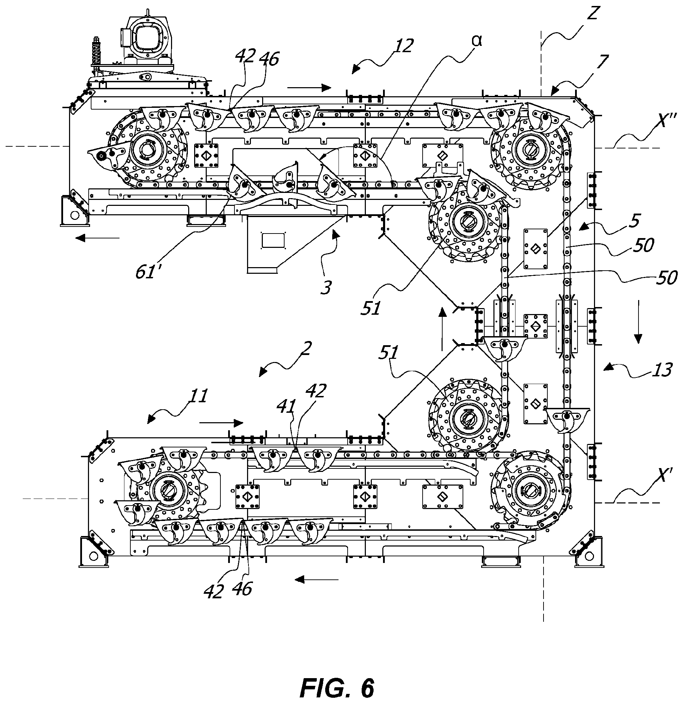

The profile of the cam element **61'** may be such to allow a maximum rotation of the bucket **4** in an angular range **α** between 100° - 150°, preferably 130° - 140° with respect to the plane defined by the advancement portion **12,** an angular range measured between the latter and the edge area of the bucket **4** as particularly shown in **FIG.** 6.

The interaction between the pivot **62'** and the cam profile **61',** will therefore allow to unload the material at the one or more unloading areas **3** of interest.

As a result, once the bucket **4** will have unloaded the material, the cam profile **61'** may rotate in the opposite direction to return to the initial inoperative position thereof.

On the contrary, should the pivot **62'** be in the retracted position at an unloading area **3,** the cam profiles **61'** of the buckets **4** may therefore not interact with the latter and therefore the buckets **4** may not unload the moved material at the unloading area **3.**

Preferably, the connection means **9** may further include at least one interface element **63** and at least one pair of fixing elements **64'** and **64".**

In a preferred but non-exclusive embodiment, the interface element **63** may be substantially T-shaped.

Specifically, the interface element **63** may be coupled to at least one side wall **44** and/or **44',** while the fixing elements **64'** and **64"** may be obtained on the interface element **63** or they may be coupled with the latter in a longitudinal direction so as to be mutually superimposed.

In particular, the element **64'** may be positioned above the element **64".**

Furthermore, the cam **61'** may be removably coupled with such elements **64'** and **64".**

Even more specifically, the cam **61'** may have a portion **610"** removably fixed to the element **64"** and a portion **610'** prismatically coupled to the element **64'.**

In a preferred but non-exclusive embodiment, the elements **64'** and **64"** may be substantially cylindrical.

In particular, the element **64'** may have a portion **640'** with a first diameter coupled with the interface **63** and an opposite portion **640"** having a diameter smaller than the first.

On the other hand, the portion **610'** of the cam **61'** may include an opening **6100** counter-shaped with respect to the portion **640',** that is it may have a substantially circular or arc-shaped base with a circumference having diameter substantially equal to the diameter of the portion **640'.**

In this manner, the opening walls **6100** may be in contact with at least one part of the outer surface of the portion **640'.**

The portion **610"** may instead be removably fixed to the element **64"** in a per se known manner for example using a screw **6400** or the like.

Should there arise the need to carry out a maintenance operation on the cam **61'** it will be possible to disassemble only the latter without removing the bucket **4** from the chains **50,** therefore removing the fastening screw **6400** of the element **610"** as well as bringing the opening **6100** at the portion **640"** therefore remove the cam **61'** below.

Advantageously, the control means **8** may be suitably configured to selectively act on the pivots **62'** and to move them from the retracted position to the extended position to enable the unloading area **3** and vice versa to disable it.

To this end, the control means **8** may include one or more solenoid valves or pneumatic valves or any electric actuation device suitably connected with the pivots **62'** to move them from the retracted position to the extended position and vice versa.

Preferably, the control means **8** may also comprise a special control software, which is preprogrammed or which can be set by an operator from an operator's panel.

In this manner, the control means 8 may therefore allow to select the unloading areas 3 of interest in which the buckets 4 may subsequently unload the moved heavy and/or abrasive material.

Advantageously, the control means **8** may also be suitably configured to select a fixed safety unloading area **3,** so as to ensure - in any case - the unloading of the material from the buckets **4** at the latter.

In this manner, this will therefore allow to prevent the return of the buckets **4** - still full - to the loading area **2.**

Due to the presence of a fixed safety unloading area **3,** the buckets **4** may actually unload the moved material and therefore return - empty - to the loading area **2** so as to be once again loaded with material to be moved.

Furthermore, it is clear that there may also be provided for a plurality of fixed safety unloading areas **3,** without departing from the scope of protection of the attached claims.

According to a preferred but not exclusive embodiment, each bucket **4** further comprises a support edge **41** and a connection edge **42,** respectively arranged long the edge of the wall **43** and **43',** as shown in **FIGS. 1** and **2****.**

The support edge **41** and the connection edge **42** are therefore faced and mutually spaced apart with respect to the axis **T.**

Advantageously, the connection edge **42** of a first bucket **4** is suitably shaped to be mutually superimposed to the support edge **41** of a second consecutive bucket **4,** when both the first bucket **4** cand the second bucket **4** are in the portion **11** or in the portion **12,** to allow the stable connection between the buckets **4.**

In particular, the expression stable connection is used to indicate that the buckets **4** may be constrained to each other and therefore they may move integrally joined in the same movement direction.

More precisely, the superimposition of the connection edge **42** of a bucket **4** on the support edge **41** of a consecutive bucket **4,** and therefore the stable connection between them, may occur when the axes **U** of the buckets **4** are substantially coincident, or particularly at the loading area **2** and/or at the unloading areas **3,** as shown in **FIGS. 1** and **4****.**

Specifically, the connection edge **42** may rest against support edge **41** at the portion **11,** in particular at the loading area **2.**

On the other hand, the support edge **41** may rest against the connection edge **42** at the portion **12.**

However, it is clear that the connection edge **42** may rest against the support edge **41** even at the portion **12** and therefore at the unloading area **3** or only at the latter and vice versa, that is the support edge **41** may rest against the connection edge **42** even at the portion **11** or only at the latter without departing from the scope of protection of the attached claims.

Therefore, it is clear that, both on the third portion **13** and on the areas interested by the pinions **51,** the buckets **4** will not have the substantially coincident axes **U** and therefore they will not be stably connected to each other.

Advantageously, the superimposition of the connection edge **42** of a bucket **4** on the support edge **41** of a subsequent bucket **4** may allow to prevent the abrasion thereof and therefore extend the useful life of the buckets **4.**

In addition, the connection edge **42** further has a suitably shaped profile and, preferably, a sloping profile.

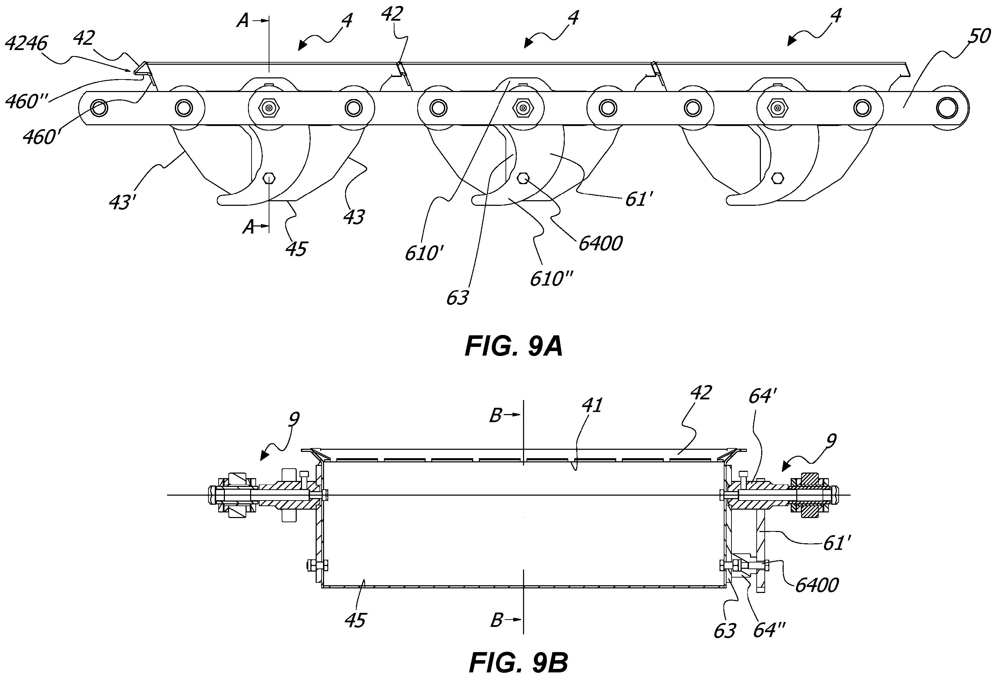

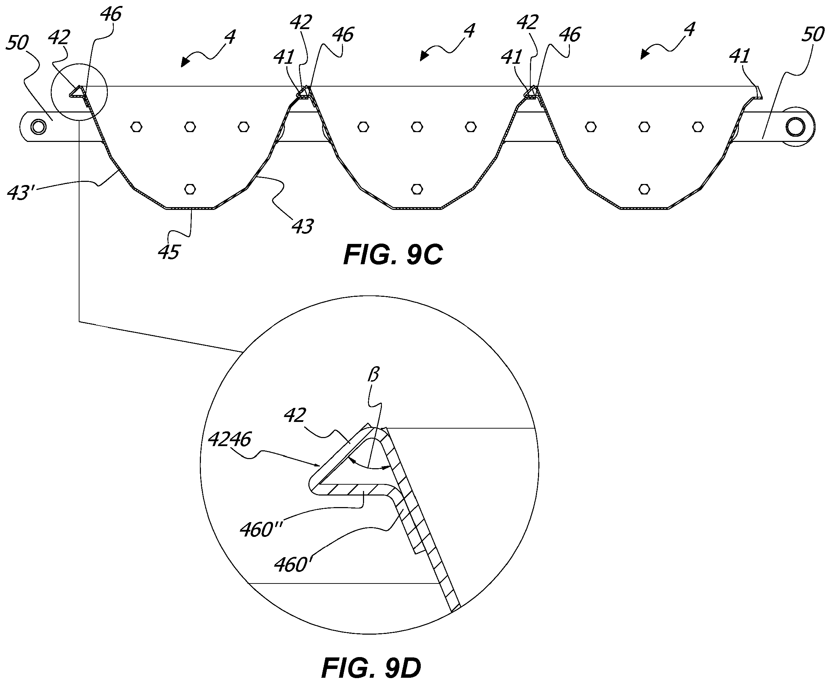

More precisely, the sloping profile of the connection edge **42** of the buckets **4** may therefore define an angle **β** between 45° - 70°, preferably between 50° - 65° as particularly shown in **FIG. 9D****,** defined between the connection edge **42** and the wall **43'.**

However, it is clear that the connection edge **42** may have any suitably shaped profile, provided that it allows the stable connection of the buckets **4** at the one or more loading **2** and unloading **3** areas, without departing from the scope of protection of the attached claims.

Advantageously, the sloping profile of the connection edge **42** may therefore allow to minimise the deposition and the resulting stagnation of any material thereon, in particular if the heavy and/or abrasive material - both when the buckets **4** are loaded with the material to be moved and possibly when they unload the moved material - respectively at the one or more loading and unloading areas.

Advantageously, there may also be provided for means for cleaning the connection edges **42,** for example brushes or the like, positioned at the area **2** for loading the buckets **4.**

The special means for cleaning the connection edges **42** of the buckets **4** may therefore mechanically remove the material therefrom.

The material removed from a bucket **4** may therefore be collected in a bucket **4** adjacent thereto.

It is however clear that the removed material may be collected below the structure **7** of the bucket elevator **1** and therefore be recovered subsequently without departing from the scope of protection of the attached claims.

This will therefore allow to minimise the waste material and the possible dispersion of the moved material, with ensuing increase in efficiency of the bucket elevator **1.**

Possibly, the support structure **7** of the bucket elevator **1** may be substantially open and comprise a plurality of removable parts, to facilitate the detection of problems and malfunctions of the bucket elevator **1.**

Advantageously, should there arise the need to carry out routine or even extraordinary maintenance, it will therefore be possible to remove the removable parts of the bucket elevator **1,** when the latter is switched off, so as to be able to access the interested area more easily and without having to disassemble the entire support structure **7.**

Therefore, this solution allows to significantly reduce the time required for routine and extraordinary maintenance of the bucket elevator **1,** with a resulting reduction of machine downtime and increase in the overall efficiency thereof.

In a preferred but non-exclusive embodiment, each bucket **4** may then comprise a longitudinal reinforcement bar **46** preferably positioned in proximity of the connection edge **42** and integrally joined with the bucket **4,** as shown in **FIG.** 2.

However, it is clear that the longitudinal reinforcement bar **46** may also be positioned in another point of the bucket **4** without departing from the scope of protection of the attached claims.

By way of example, it may be possibly positioned on the bottom wall **45,** to lower the barycentre of the bucket **4** and confer - as a result - greater stability to the latter during the movement and the loading/unloading.

Furthermore, it is clear that each bucket **4** may include one or more reinforcement bars **46** positioned in several points thereof, for example one or more bars **46** positioned in proximity of the connection edge **42** and/or one or more bars **46** positioned on the bottom wall **45** and/or one or more bars **46** positioned in any other point of the bucket **4.**

Furthermore, the presence of the one or more longitudinal reinforcement bars **46** will allow to increase the torsional strength of the bucket and - as a result - the useful life thereof.

To this end, the one or more longitudinal reinforcement bars **46** may for example be made of steel.

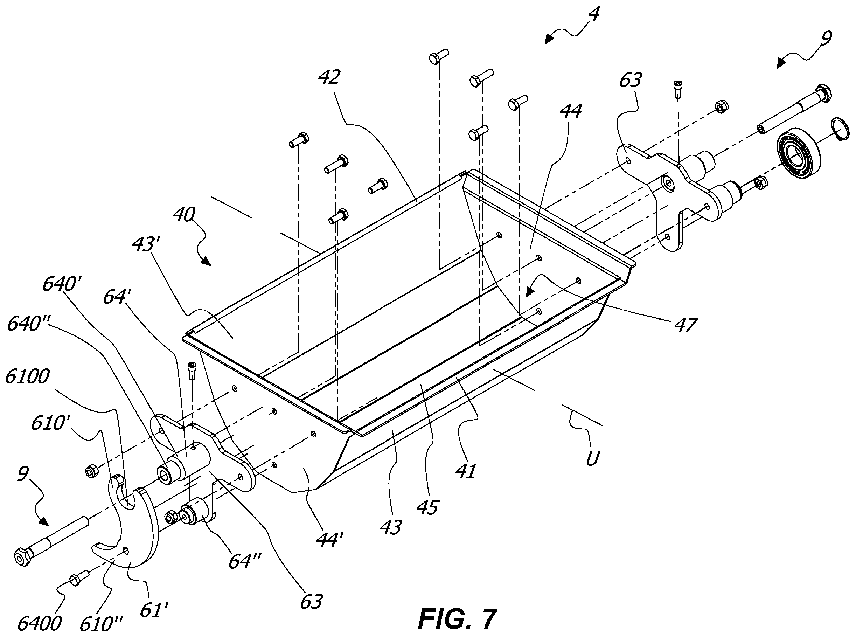

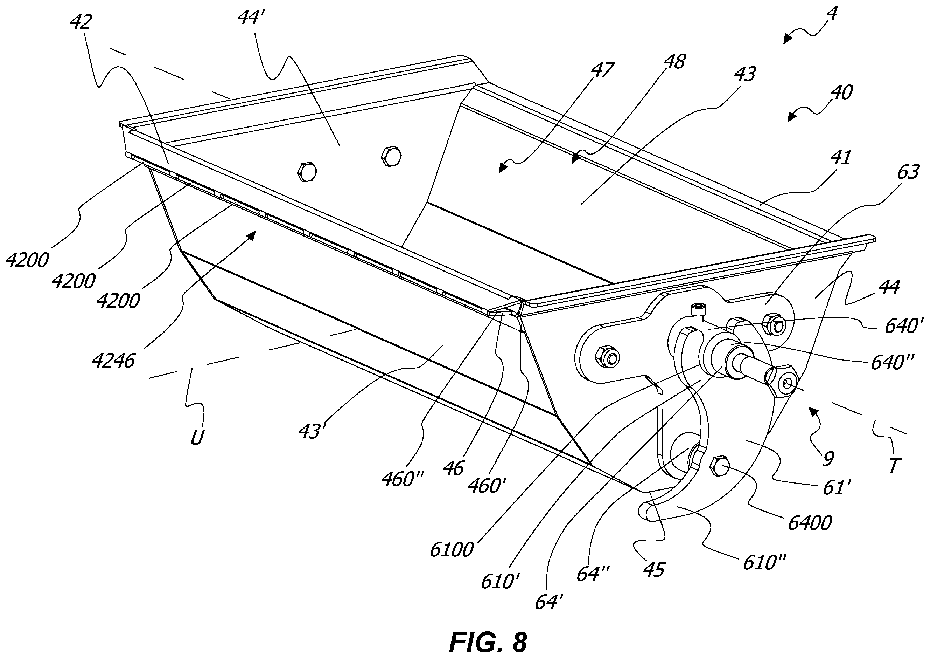

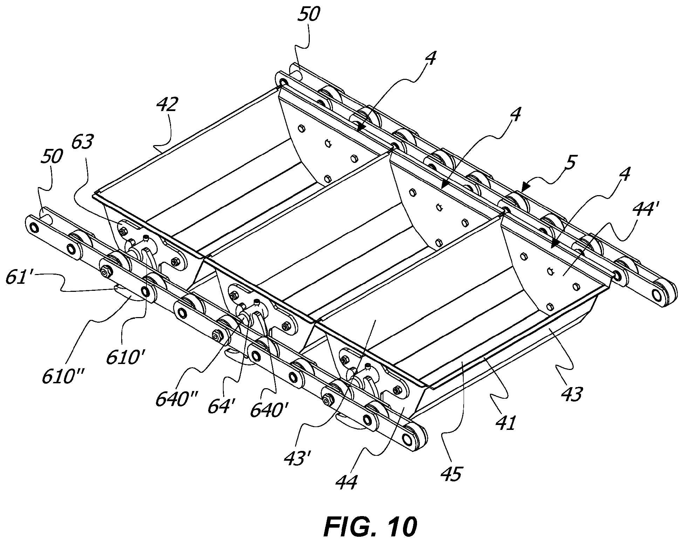

Advantageously, in an embodiment particularly shown in **FIGS. 6** to **10****,** each bucket **4** may include a reinforcement bar **46** integrally joined with connection edge **42.**

In this case, the reinforcement bar **46** include a portion **460'** integrally joined with the side wall **43'** of the bucket **4** and a portion **460"** integrally joined with the connection edge **42.**

The portion **460"** and the connection edge **42** therefore define a substantially V-shaped configuration which may allow to define the above-mentioned sloping profile of the connection edge **42** to minimise the deposition and stagnation of material thereon.

It is therefore clear that besides the connection edge **42,** also the portion **460"** may interact with the support edge **41** and in particular the portion **460"** may rest on the latter at the portions **11** and/or **12** mentioned above.

On the other hand, the portion **460'** may contribute to prevent the above-mentioned torsions due to the large dimensions of the bucket **4** as well as the weight of the conveyed material.

Preferably, from a construction point of view, the connection edge **42** and the bar **46** may be obtained starting from a single metal lip **4246** whose folding may define the edge **42,** the portions **460'** and **460".**

To this end, there may be obtained suitable grooves **4200** between the area defining the edge **42** and the portion **460"** to facilitate the folding thereof.

Subsequently, the grooves **4200** may be welded in a per se known manner, just like the portion **460'** to integrally join it to the wall **43'.**

According to a further aspect of the invention, each pinion **51** may further be modular and therefore consist of a defined number of sectors.

In a preferred but non-exclusive embodiment, each pinion **51** may be made with three pieces which can be assembled and disassembled with respect to each other.

This means that should one or more sectors of the pinion **51** be damaged, it would therefore be possible to replace only the damaged sectors thereof, hence saving economically.

According to a further aspect of the invention, the drive shafts may be removable from the support structure **7** due to the presence of a plurality of removable parts, should there be a malfunction or should the latter be damaged.

Furthermore, there may be also provided for sensors, such as for example accelerometers, strain gauges, or load cells, for constantly monitoring the moving components and therefore allow a predictive maintenance thereof.

To this end, they may be actually positioned at the support structure **7** and/or at the modular pinions and/or at the movement means **5,** to monitor the mechanical stresses and therefore detect possible malfunctions and/or failures.

According to a further aspect of the invention, there may also be provided for a line **L** for moving the heavy and/or abrasive material to be moved, which may therefore consecutively comprise:
- loading means **MC** adapted to load the heavy and/or abrasive material to be moved at the one or more loading areas **2,** such as for example vibrating screening machines or the like, which can be suitably configured to load the buckets with a predetermined uniform and constant amount of heavy and/or abrasive material;
- a bucket elevator **1** for moving the heavy and/or abrasive material from one or more loading areas **2** arranged at the first height to the plurality of unloading areas **3** arranged at the second height, the latter raised with respect to the first height, as described above;
- unloading means **MS** arranged at the one or more unloading areas **3,** such as for example hoppers or the like which may convey the heavy and/or abrasive material on multiple conveyor belts **NT,** arranged at each unloading area **3.**

In particular, the conveyor belts **NT** may extend along an axis **Y** incident or at most perpendicular to the axis **X"** of the second portion **12** for advancing the bucket elevator **1.**

Advantageously, the presence of multiple conveyor belts **NT** in proximity of the unloading areas **3** of the bucket elevator **1** may therefore allow to separate the heavy and/or abrasive material, which may be stored or subjected to possible subsequent processes.

Therefore, this will allow to obtain a line **L** for moving heavy and/or abrasive material that is particularly efficient and/or versatile.

Preferably, there may be provided for one or more anti-contamination elements for identifying contaminants in the moved heavy and/or abrasive material.

The presence of contaminants in the heavy and/or abrasive material could actually be significantly harmful if subjected to further processes downstream of the line **L.**

Advantageously, it will be possible to position the one or more anti-contamination elements at the second unloading means **MS** to identify possible contaminants.

For example, should there arise the need to detect the presence of ferrous or generally ferromagnetic material in the heavy and/or abrasive material, it will be possible to position one or more de-ironing filters or the like at the second unloading means **MS,** for example in the hoppers, to intercept them and - as a result - remove them from the heavy and/or abrasive material by electromagnetic separation.

However, it is clear that there may also be present other types of anti-contamination means depending on the type and size of the contaminants present in the heavy and/or abrasive material, without departing from the scope of protection of the attached claims.

In a further aspect of the invention, irrespective of the above, there may be considered a bucket **4** for a bucket elevator as described above, having the above-mentioned bottom wall **45,** side walls **43, 43', 44, 44',** compartment **47** accessible from an opening **48,** support edge **41,** connection edge **42** and one or more reinforcement bars **46.**

Specifically, the latter may include all the characteristics specifically described above.

According to a further aspect of the invention, there may be provided for a method of use of the bucket elevator **1 for** moving the heavy and/or abrasive material, for example marble, quartz, silica or the like, from a first lower height to a second higher height.

Basically, the buckets **4** may be filled with the heavy and/or abrasive material to be moved at the loading area **2.**

The step for loading the buckets 4 may be carried out automatically, using vibrating screening machines or the like, or even manually, through an operator designated to load the buckets 4 with the heavy and/or abrasive material.

Subsequently, there may be provided for a step for selecting one or more unloading areas **3** using the control means **8.**

Such selection may therefore be carried out from an operator's panel through a dedicated software.

In particular, the control means **8** may act on the unloading means **6** so as to move the pivots **62'** arranged at the selected unloading means **3** from the retracted position to the extended position.

By so doing, the pivots **62'** in extended position may therefore cooperate with the cam profiles **61'** of the buckets **4** to allow the latter to unload the heavy and/or abrasive material at the selected unloading areas **3.**

Subsequently to the step for selecting the unloading areas **3,** the buckets **4** filled with the heavy and/or abrasive material may therefore be moved using means **5** for moving from the loading area **2** - arranged at the lower height - until the one or more selected unloading areas **3** arranged at the higher height.

In proximity of the unloading areas **3** of interest, the buckets **4** may therefore selectively unload the heavy and/or abrasive material in the one or more selected unloading areas **3.**

Such method of use may further be implemented to be carried out iteratively.

The method of use thus described has the particular advantage of being easy to implement and particularly reliable, thanks to the use of a dedicated software.

Therefore, the operator will only have to act from an operator's panel positioned in proximity of the working area, with resulting increase in the safety level of the bucket elevator **1.**

Such bucket elevator **1** is also particularly efficient from an energy point of view, given that it allows to move significant volumes of heavy and/or abrasive material at a considerable movement speed, with ensuing increase in the nominal capacity and in the overall efficiency of the bucket elevator **1.**

In the light of the above, the present invention attains the pre-established objects.

Furthermore, it is clear that the present invention may include various parts and/or similar or identical elements. Unless otherwise specified, similar or identical parts and/or elements will be indicated using a single reference number, it being clear that the described technical characteristics are common to all similar or identical parts and/or elements.

The invention is susceptible to modifications and variants, all falling within the scope of protection of the attached claims. All details can be replaced by other technically equivalent elements, and the materials can be different depending on the needs, without departing from the scope of protection of the invention defined by the attached claims.

## Claims

1. A bucket elevator for moving heavy and/or abrasive material, for example marble, quartz, silica or the like, from a first lower height to a second higher height superimposed to the first, comprising:
- a plurality of buckets (**4**) suitably sized and configured to convey the heavy and/or abrasive material;
- at least one area (**2**) for loading each bucket of said plurality of buckets (**4**) with the heavy and/or abrasive material to be moved arranged at said first lower height;
- at least one area (**3**) for unloading the moved heavy and/or abrasive material arranged at said second higher height;
- means (**5**) for moving said plurality of buckets (**4**) operatively connected therewith and suitably configured to move the latter between said at least one loading area (**2**) and said at least one unloading area (**3**), the movement means (**5**) including a first advancement portion (**11**) at said at least one loading area (**2**) and a second advancement portion (**12**) defining a first axis (**X**") at said at least one unloading area (**3**), the buckets (**4**) further being free to rotate around a second axis (**T**) substantially perpendicular to said first axis (**X**") at least at said at least one unloading area (**3**);
- unloading means (**6**) arranged at said at least one unloading area (**3**) and acting on the buckets (**4**) to allow the rotation thereof around said second axis (**T**) so as to unload said heavy and/or abrasive material at the at least one unloading area (**3**);
wherein each bucket of said plurality of buckets (**4**) includes at least one support edge (**41**) and a connection edge (**42**) facing each other with respect to said second axis (**T**) and spaced along a direction perpendicular to the latter, each bucket of said plurality of buckets (**4**) including at least one side wall (**43**') extending substantially parallel to said second axis (**T**), said connection edge (**42**) extending along the edge of the latter and being spaced therefrom by a predetermined angle (**β**);
wherein said connection edge (**42**) of a first bucket (**4**) is mutually superimposed with respect to said support edge (**41**) of a second bucket (**4**) at least at one of said first and one second advancement portion (**11, 12**) to facilitate the stable connection between them respectively at said at least one loading area (**2**) and said at least one unloading area (**3**), said connection edge (**42**) preferably having a sloping profile suitably shaped to prevent the deposit of heavy and/or abrasive material thereon; and
**characterized in that** each bucket of said plurality of buckets (**4**) includes at least one longitudinal reinforcement bar (**46**) positioned in proximity of said connection edge (**42**) integrally joined with the bucket (**4**), said at least one reinforcement bar (**46**) including at least one first portion (**460'**) integrally joined with said at least one side wall (**43**') and a second portion (**460**") mutually integrally joined with said connection edge (**42**), said second portion (**460**") and said connection edge (**42**) defining a substantially V-shaped configuration.

2. Bucket elevator according to the preceding claim, comprising a plurality of unloading areas (**3**) mutually consecutive along said first axis (**X**").

3. Bucket elevator according to the preceding claim, further comprising control means (**8**) acting on said unloading means (**6**) suitably configured to allow the selective unloading of the heavy and/or abrasive material at at least one unloading area (**3**) selected from said plurality of unloading areas (**3**).

4. Bucket elevator according to the preceding claim, wherein said movement means (**5**) comprise at least one pair of chains (**50**) movable along said first portion (**11**) and second portion (**12**) mutually faced, the chains (**50**) being rotatably connected with the buckets (**4**) of said plurality of buckets (**4**) to facilitate the free rotation of the latter at least around said second axis (**T**) in an angular range (**α**) preferably measuring 100° - 150°.

5. Bucket elevator according to one or more of the preceding claims, further comprising a support structure (**7**) which includes said at least one unloading area (**3**), said unloading means (**6**) comprising at least one abutment element (**61**) and at least one counteracting element (**62**) mutually interacting and shaped to allow the rotation of the buckets (**4**) around said second axis (**T**) at said at least one unloading area (**3**), one of said support structure (**7**) and said buckets (**4**) including said abutment element (**61**), the other of said support structure (**7**) and said buckets (**4**) including said counteracting element (**62**).

6. Bucket elevator according to claims 3 and 5 or 4 and 5, wherein said buckets (**4**) include at least one cam element (**61**') defining said abutment element (**61**), said support structure (**7**) including at least one pivot (**62**') which can be moved between an extended position and a retracted position along an axis parallel to said first axis (**X**") and defining said at least one abutment element (**62**), said control means (**8**) acting on the at least one pivot (**62**') arranged at the unloading area (**3**) selected from said plurality of unloading areas (**3**), to move it from the retracted position to the extended position so as to allow the interaction thereof with said at least one cam element (**61**').

7. Bucket elevator according to any of the preceding claims, wherein said connection edge (**42**) rests on said support edge (**41**) at least at said at least one loading area (**2**) of said first portion (**11**) for preventing the deposition of heavy and/or abrasive material on the connection edge (**42**).

8. Bucket elevator according to any one of the preceding claims, wherein said first portion (11) defines a third axis (**X**') substantially parallel to said first axis (**X**") and mutually spaced therefrom, said advancement means (**5**) further comprising a third advancement portion (**13**) interposed between said first and second portion (**11, 12**) and defining a fourth axis (**Z**) substantially perpendicular to said first and third axis (**X", X'**).

9. A line (**L**) for moving heavy and/or abrasive material by means of a bucket elevator (**1**), consecutively comprising:
- means (**MC**) for loading the heavy and/or abrasive material to be moved arranged at the at least one loading area (**2**);
- said bucket elevator (**1**) according to one or more of claims 2 to 8 when depending on 2;
- second means (**MS**) for unloading the heavy and/or abrasive material moved arranged at said plurality of unloading areas (**3**), the same comprising a plurality of conveyor belts (**NT**) each at each unloading area (**3**), each defining a fifth axis (**Y**) substantially incident with respect to said first axis (**X**").

10. Method of use of a bucket elevator (**1**) for moving heavy and/or abrasive material, for example marble, quartz, silica or the like, from a first lower height to a second higher height superimposed to the first, comprising consecutively and iteratively the steps of:
- loading the heavy and/or abrasive material to be moved in at least one loading area (**2**) of said bucket elevator (**1**) according to one or more of claims 3 to 8 when depending on 3;
- selecting at least one unloading area (**3**) between said plurality of unloading areas (**3**) by said control means (**8**);
- moving the heavy and/or abrasive material from said at least one loading area (**2**) to said at least one selected unloading area (**3**);
- selective unloading of the heavy and/or abrasive material by actuating said first unloading means (**6**) by said control means (**8**) for unloading the heavy and/or abrasive material moved in said at least one unloading area (**3**) selected from said plurality of unloading areas (**3**).

## Patentansprüche

1. Eimerwerk zur Förderung schwerer und/oder abrasiver Materialien wie beispielsweise Marmor, Quarz, Siliziumdioxid oder dergleichen von einer ersten geringeren Höhe auf eine zweite höhere Höhe, die darüberliegend angeordnet ist, umfassend:
- Eine Vielzahl von Eimern (4), die entsprechend bemessen sind und dazu ausgebildet sind, das schwere und/oder abrasive Material zu fördern;
- wenigstens einen Bereich (2) zur Beladung jedes Eimers der Vielzahl von Eimern (4) mit dem zu fördernden schweren und/oder abrasiven Material, angeordnet auf dere ersten geringeren Höhe;
- wenigstens einen Bereich (3) zum Entladen des geförderten schweren und/oder abrasiven Materials, der auf der zweiten Höhe angeordnet ist;
- Mittel (5) zur Bewegung der Vielzahl von Eimern (4), die mit diesen in Wirkverbindung stehen und entsprechend ausgebildet sind, um letztere zwischen dem wenigstens einen Ladebereich (2) und dem wenigstens einen Entladebereich (3) zu bewegen, wobei die Mittel zur Bewegung (5) wenigstens einen ersten Förderteil (11) in dem wenigstens einen Ladebereich (2) und einen zweiten Förderteil (12) umfasst, der eine erste Achse (X") in dem wenigstens einen Entladebereich (3) definiert, wobei die Eimer (4) weiter um eine zweite Achse (T), die wenigstens in dem Entladebereich (3) im Wesentlichen rechtwinklig zu der ersten Achse (X") ist, frei drehbar sind;
- Entlademittel (6), die in dem wenigstens einen Entladebereich (3) angeordnet sind und die auf die Eimer (4) einwirken, um die Drehung derselben um die zweite Achse (T) zu bewirken, um das schwere und/oder abrasive Material in dem wenigstens einen Entladebereich (3) zu entladen;
wobei jeder Eimer der Vielzahl von Eimern (4) wenigstens eine Stützkante (41) und eine Verbindungskante (42) umfasst, die bezüglich der zweiten Achse (T) einander zugewandt sind und in einer Richtung senkrecht zu letzterer voneinander beabstandet sind, wobei jeder Eimer der Vielzahl von Eimern (4) wenigstens eine Seitenwand (43') umfasst, die sich im Wesentlichen parallel zu der zweiten Achse (T) erstreckt, die Verbindungskante (42) sich entlang des Randes der Letzteren erstreckt und von dieser mit einem vorbestimmten Winkel (β) beabstandet ist;
wobei die Verbindungskante (42) eines ersten Eimers (4) gegenseitig bezüglich der Stützkante (41) eines zweiten Eimers (4) wenigstens bei einem der ersten und zweiten Förderteile (11, 12) überlagert ist, um eine stabile Verbindung zwischen diesen jeweils in wenigstens einem Ladebereich (2) und wenigstens einem Entladebereich (3) zu erleichtern, wobei die Verbindungskante (42) vorzugsweise ein abschüssiges Profil aufweist, das entsprechend geformt ist, um die Ablagerung von schwerem und/oder abrasivem Material darauf zu verhindern; und
**dadurch gekennzeichnet, dass** jeder Eimer der Vielzahl von Eimern (4) wenigstens eine längliche Verstärkungsstange (46) umfasst, die in der Nähe der Verbindungskante (42) angeordnet ist und die einstückig mit dem Eimer (4) verbunden ist, wobei diese wenigstens eine Verstärkungsstange (46) wenigstens einen ersten Teil (460') umfasst, der einstückig mit der wenigstens einen Seitenwand (43') verbunden ist und einen zweiten Teil (460") umfasst, der gegenseitig einstückig mit dem Stützrand (42) verbunden ist, wobei der zweite Teil (460") eine im wesentlichen V-förmige Konfiguration definiert.

2. Eimerwerk nach dem vorhergehenden Anspruch, umfassend eine Vielzahl von Entladebereichen (3), die gegenseitig aufeinanderfolgend entlang der ersten Achse (X") angeordnet sind.

3. Eimerwerk nach dem vorhergehenden Anspruch, weiterhin umfassend Steuermittel (8), die auf die Entlademittel (6) einwirken und entsprechend ausgebildet sind, um das selektive Entladen des schweren und/oder abrasiven Materials in wenigstens einem Entladebereich (3) zu ermöglichen, der ausgewählt ist aus einer Vielzahl von Entladebereichen (3).

4. Eimerwerk nach dem vorhergehenden Anspruch, bei welchem die Bewegungsmittel (5) wenigstens ein Paar Ketten (50), die gegenseitig zugewandt beweglich entlang des ersten Förderteils (11) und zweiten Förderteils (12) umfassen, die Ketten (50) drehbar mit den Eimern (4) der Vielzahl von Eimern (4) verbunden sind, um die freie Drehung der Letzteren wenigstens um die zweite Achse (T) in einem Winkelbereich (α), vorzugsweise von 100° bis 150° zu erleichtern.

5. Eimerwerk nach einem oder mehrerer der vorstehenden Ansprüche, weiterhin umfassend eine Tragstruktur (7), welche wenigstens einen Entladebereich (3) umfasst, wobei die Entlademittel (6) wenigstens ein Anschlagelement (61) und wenigstens ein gegenwirkendes Element (62) umfassen, die gegenseitig zusammenwirken und die so geformt sind, dass sie die Drehung der Eimer (4) um die zweite Achse (T) wenigstens in dem wenigstens einen Entladebereich (3) ermöglichen, wobei eine der Tragstrukturen (7) und dere Eimer (4) das Anschlagelement (61) umfasst, die andere der Tragstrukturen (7) und der Eimer (4) das gegenwirkende Element (62) umfasst.

6. Eimerwerk nach den Ansprüchen 3 und 5 oder 4 und 5, bei welchem die Eimer (4) wenigstens ein Nockenelement (61') umfassen, welches das Anschlagelement (61) definiert, die Tragstruktur (7) wenigstens einen Schwenkzapfen (62') umfasst, der zwischen einer ausgestellten Position und einer zurückgezogenen Position entlang einer Achse parallel zu der ersten Achse (X") bewegbar ist und das wenigstens eine Anschlagelement (62) definiert, wobei die Steuermittel (8) auf den wenigstens einen Schwenkzapfen (62 ') einwirken, der in dem Entladebereich (3) angeordnet ist, der aus einer Vielzahl von Entladebereichen (3) ausgewählt ist, um diesen aus der zurückgezogenen Stellung in die ausgestellte Stellung zu bewegen, um so die Interaktion desselben mit dem wenigstens einen Nockenelement (61') zu erlauben.

7. Eimerwerk nach einem der vorstehenden Ansprüche, bei welchem die Verbindungskante (42) auf der Stützkante (41), wenigstens in wenigstens einem Ladebereich (2) des ersten Teils (11) aufliegt, um die Ablagerung von schwerem und/oder abrasiven Material auf der Verbindungskante (42) zu verhindern.

8. Eimerwerk nach einem der vorhergehenden Ansprüche, bei welchem das erste Teil (11) eine dritte Achse (X') definiert, die sich im Wesentlichen parallel zu der ersten Achse (X") erstreckt und die gegenseitig von dieser beabstandet ist, wobei die Fördermittel (5) weiterhin einen dritten Förderteil (13) umfassen, der zwischen dem ersten und dem zweiten Teil (11, 12) angeordnet ist und eine vierte Achse (Z) definiert, die im Wesentlichen senkrecht zu der ersten und dritten Achse (X", X') angeordnet ist.

9. Linie (L) zur Bewegung schwerer und/oder abrasiver Materialien mittels eines Eimerwerks (1), der Reihe nach umfassend:
- Mittel (MC) zum Laden der zu fördernden schweren und/oder abrasiven Materialien in dem wenigstens einen Ladebereich (2);
- das Eimerwerk (1) gemäß einem oder mehrerer der Ansprüche 2 bis 8, soweit diese auf Anspruch 2 zurückgezogen sind;
- zweite Mittel (MS) zum Entladen der zu fördernden schweren und/oder abrasiven Materialien, die an der Vielzahl von Entladebereichen (3) angeordnet sind, dieselben umfassend eine Vielzahl von Förderbändern (NT) jeweils in jedem Entladebereich (3), wobei jedes eine fünfte Achse (Y) definiert, die im Wesentlichen deckungsgleich bezüglich der ersten Achse (X") ist.

10. Verfahren zur Verwendung eines Eimerwerks (1) zur Förderung schwerer und/oder abrasiver Materialien, beispielsweise Marmor, Quarz, Siliciumdioxid oder dergleichen aus einer ersten geringeren Höhe auf eine zweite höhere Höhe, die oberhalb der ersten angeordnet ist, umfassend nacheinander und iterativ die folgenden Schritte:
- Laden des zu fördernden schweren und/oder abrasiven Materials in wenigstens einem Ladebereich (2) des Eimerwerks gemäß einem oder mehrerer der Ansprüche 3 bis 8, soweit diese auf Anspruch 3 zurückgezogen sind;
- Auswählen wenigstens eines Entladebereichs (3) aus einer Vielzahl von Entladebereichen (3) mittels der Steuermittel (8);
- Fördern des schweren und/oder abrasiven Materials aus dem wenigstens einen Entladebereich (2) an wenigstens einen ausgewählten Entladebereich (3);
- selektives Entladen des schweren und/oder abrasiven Materials durch Betätigung der ersten Entlademittel (6) durch die Steuermittel (8), um
das schwere und/oder abrasive Material zu entladen, welches in dem wenigstens einen Entladebereich (3) ausgewählt aus einer Vielzahl von Entladebereichen (3) gefördert wurde.

## Revendications

1. Un élévateur à godets pour déplacer un matériau lourd et/ou abrasif, par exemple du marbre, du quartz, de la silice ou similaire, d'une première hauteur inférieure à une deuxième hauteur supérieure superposée à la première, comprenant :
- une pluralité de godets (4) dimensionnés de manière appropriée et conçus pour acheminer le matériau lourd et/ou abrasif ;
- au moins une zone (2) pour charger chaque godet de ladite pluralité de godets (4) avec le matériau lourd et/ou abrasif à déplacer disposé au niveau de ladite première hauteur inférieure ;
- au moins une zone (3) pour décharger le matériau lourd et/ou abrasif déplacé disposé au niveau de ladite deuxième hauteur supérieure ;
- des moyens (5) pour déplacer ladite pluralité de godets (4) reliés de manière opérationnelle avec ceux-ci et conçus de manière appropriée pour déplacer ces derniers entre ladite au moins une zone de chargement (2) et ladite au moins une zone de déchargement (3), les moyens de déplacement (5) comprenant une première portion d'avancement (11) au niveau de ladite au moins une zone de chargement (2) et une deuxième portion d'avancement (12) définissant un premier axe (X") au niveau de ladite au moins une zone de déchargement (3), les godets (4) étant en outre montés mobiles en rotation selon un deuxième axe (T) sensiblement perpendiculaire audit premier axe (X") au moins au niveau de ladite au moins une zone de déchargement (3) ;
- des moyens de déchargement (6) disposés au niveau de ladite au moins une zone de déchargement (3) et agissant sur les godets (4) pour permettre la rotation de ceux-ci selon ledit deuxième axe (T) de manière à décharger ledit matériau lourd et/ou abrasif au niveau de l'au moins une zone de déchargement (3) ;
dans lequel chaque godet de ladite pluralité de godets (4) comprend au moins un bord de support (41) et un bord de connexion (42) se faisant face l'un à l'autre par rapport audit deuxième axe (T) et espacés le long d'une direction perpendiculaire à ce dernier, chaque godet de ladite pluralité de godets (4) comprenant au moins une paroi latérale (43') s'étendant de manière sensiblement parallèle audit deuxième axe (T), ledit bord de connexion (42) s'étendant le long du bord de ce dernier et étant espacé de celui-ci d'un angle prédéterminé (β) ;
dans lequel ledit bord de connexion (42) d'un premier godet (4) est mutuellement superposé par rapport audit bord de support (41) d'un deuxième godet (4) au moins au niveau d'une de ladite première et de ladite deuxième portion d'avancement (11, 12) pour faciliter la connexion stable entre elles respectivement au niveau de ladite au moins une zone de chargement (2) et de ladite au moins une zone de déchargement (3), ledit bord de connexion (42) ayant de préférence un profil incliné dimensionné de manière appropriée pour empêcher le dépôt d'un matériau lourd et/ou abrasif sur celui-ci ; et
**caractérisé en ce que** chaque godet de ladite pluralité de godets (4) comprend au moins une barre de renforcement longitudinale (46) positionnée à proximité dudit bord de connexion (42) intégralement solidaire du godet (4), ladite au moins une barre de renforcement (46) comprenant au moins une première portion (460') intégralement solidaire de ladite au moins une paroi latérale (43') et une deuxième portion (460") mutuellement intégralement solidaire dudit bord de connexion (42), ladite deuxième portion (460") et ledit bord de connexion (42) définissant une configuration sensiblement en forme de V.

2. Élévateur de godets selon la revendication précédente, comprenant une pluralité de zones de déchargement (3) mutuellement consécutives le long dudit premier axe (X").

3. Élévateur à godets selon la revendication précédente, comprenant en outre des moyens de contrôle (8) agissant sur lesdits moyens de déchargement (6) conçus de manière appropriée pour permettre le déchargement sélectif du matériau lourd et/ou abrasif au niveau d'au moins une zone de déchargement (3) sélectionnée à partir de ladite pluralité de zones de déchargement (3).

4. Élévateur à godets selon la revendication précédente, dans lequel lesdits moyens de déplacement (5) comprennent au moins une paire de chaînes (50) mobile le long desdites première portion (11) et deuxième portion (12) se faisant mutuellement face, les chaînes (50) étant reliées de manière rotative aux godets (4) de ladite pluralité de godets (4) pour faciliter la rotation libre de ces derniers au moins selon ledit deuxième axe (T) dans une plage angulaire (α) mesurant de préférence 100° - 150°.

5. Élévateur à godets selon une ou plusieurs des revendications précédentes, comprenant en outre une structure de support (7) qui comprend ladite au moins une zone de déchargement (3), lesdits moyens de déchargement (6) comprenant au moins un élément de butée (61) et au moins un élément de contre-réaction (62) interagissant mutuellement et formés pour permettre la rotation des godets (4) selon ledit deuxième axe (T) au niveau de ladite au moins une zone de déchargement (3), l'un de ladite structure de support (7) et desdits godets (4) comprenant ledit élément de butée (61), l'autre de ladite structure de support (7) et desdits godets (4) comprenant ledit élément de contre-réaction (62).

6. Élévateur à godets selon les revendications 3 et 5 ou 4 et 5, dans lequel lesdits godets (4) comprennent au moins un élément de came (61') définissant ledit élément de butée (1), ladite structure de support (7) comprenant au moins un pivot (62') qui peut être déplacé entre une position étendue et une position rétractée le long d'un axe parallèle audit premier axe (X") et définissant ledit au moins un élément de butée (62), lesdits moyens de contrôle (8) agissant sur l'au moins un pivot (62') agencé au niveau de la zone de déchargement (3) sélectionnée à partir de ladite pluralité de zones de déchargement (3), pour le déplacer depuis la position rétractée jusqu'à la position étendue de manière à permettre l'interaction de celui-ci avec ledit au moins un élément de came (61').

7. Élévateur à godets selon l'une quelconque des revendications précédentes, dans lequel ledit bord de connexion (42) repose sur ledit bord de support (41) au moins au niveau de ladite au moins une zone de chargement (2) de ladite première portion (11) pour empêcher le dépôt d'un matériau lourd et/ou abrasif sur le bord de connexion (42).

8. Élévateur à godets selon l'une quelconque des revendications précédentes, dans lequel ladite première portion (11) définit un troisième axe (X') sensiblement parallèle audit premier axe (X") et espacé mutuellement de celui-ci, lesdits moyens d'avancement (5) comprenant en outre une troisième portion d'avancement (13) interposée entre lesdites première et deuxième portions (11, 12) et définissant un quatrième axe (Z) sensiblement perpendiculaire auxdits premier et troisième axes (X", X').

9. Une ligne (L) pour déplacer un matériau lourd et/ou abrasif au moyen d'un élévateur à godets (1), comprenant de manière consécutive :
- des moyens (MC) pour charger le matériau lourd et/ou abrasif à déplacer disposé au niveau de l'au moins une zone de chargement (2) ;
- ledit élévateur à godets (1) selon une ou plusieurs des revendications 2 à 8 lorsqu'elles dépendent de la 2 ;
- des deuxièmes moyens (MS) pour décharger le matériau lourd et/ou abrasif déplacé agencé au niveau de ladite pluralité de zones de déchargement (3), les mêmes comprenant une pluralité de bandes transporteuses (NT), chacune au niveau de chaque zone de déchargement (3), chacune définissant un cinquième axe (Y) sensiblement incliné par rapport audit premier axe (X").

10. Procédé d'utilisation d'un élévateur à godets (1) pour déplacer un matériau lourd et/ou abrasif, par exemple du marbre, du quartz, de la silice ou similaire, d'une première hauteur inférieure à une deuxième hauteur supérieure superposée à la première, comprenant de manière consécutive et itérative les étapes suivantes :
- le chargement du matériau lourd et/ou abrasif à déplacer dans au moins une zone de chargement (2) dudit élévateur à godets (1) selon une ou plusieurs des revendications 3 à 8 lorsqu'elles dépendent de la 3 ;
- la sélection d'au moins une zone de déchargement (3) entre ladite pluralité de zones de déchargement (3) par lesdits moyens de contrôle (8) ;
- le déplacement du matériau lourd et/ou abrasif de ladite au moins une zone de chargement (2) à ladite au moins une zone de déchargement (3) sélectionnée ;
- le déchargement sélectif du matériau lourd et/ou abrasif en actionnant lesdits premiers moyens de déchargement (6) grâce auxdits moyens de contrôle (8) pour décharger le matériau lourd et/ou abrasif déplacé dans ladite au moins une zone de déchargement (3) sélectionnée à partir de ladite pluralité de zones de déchargement (3).
